# EUROPÄISCHE PATENTSCHRIFT

(11) **EP 3 464 970 B1**
(45) Veröffentlichungstag und Bekanntmachung des Hinweises auf die Patenterteilung: **30.09.2020**
(21) Anmeldenummer: 17719492.5
(22) Anmeldetag: 30.03.2017
(51) Int. Cl.: F16K 27/00

(54) **VERFAHREN ZUM HERSTELLEN EINES VENTILGEHÄUSES SOWIE VENTIL**
METHOD FOR PRODUCING A VALVE HOUSING AND VALVE
PROCÉDÉ DE FABRICATION D'UN CORPS DE VANNE ET VANNE

(30) Priorität: 23.05.2016 DE 102016109404
(43) Veröffentlichungstag der Anmeldung: 10.04.2019
(73) Patentinhaber: Eto Magnetic GmbH, 78333 Stockach (DE)
(72) Erfinder: NIEWEGLOWSKI, Marcin, 58-506 Jelenia Góra (PL); PYZA, Andrzej, 55-003 Chrzastawa Wielka (PL); WERNER, Johannes, 88471 Laupheim (DE); FEINDLER, Michael, 78333 Stockach (DE)
(74) Vertreter: Patentanwälte Behrmann Wagner PartG mbB
(86) Internationale Anmeldenummer: PCT/EP2017/057552
(87) Internationale Veröffentlichungsnummer: WO 2017/202531

(56) Entgegenhaltungen:
- DE-A1-102010 018 206
- DE-A1-102012 201 548
- DE-B4- 10 144 289
- DE-C2- 3 050 097

## Beschreibung

Die Erfindung betrifft ein Verfahren zum Herstellen eines einen Kunststoffkörper mit mindestens einer mittels eines Siebes vor Schmutzdurchgang, insbesondere Schmutzeintrag geschützten Fluidöffnung, insbesondere einer Gas-, bevorzugt Lufteinlassöffnung oder einer Flüssigkeits-, insbesondere Öleinlassöffnung, aufweisenden Ventilgehäuses gemäß Anspruch 1 sowie ein Ventilgehäuse umfassendes, insbesondere elektromagnetisch betätigbares Ventil gemäß dem Oberbegriff des Anspruchs 9, wobei das Ventilgehäuse des Ventils einen Kunststoffkörper mit mindestens einer mittels eines Siebes vor Schmutzdurchgang geschützte Fluidöffnung aufweist, der bevorzugt ein Entlüftungs- und/oder Druck- und/oder Arbeitsanschluss zugeordnet ist.

Zum Zurückhalten von Schmutzteilchen aus einem Arbeitsfluid, beispielsweise einem Hydraulikmedium, ist es bekannt, Fluidöffnungen von Ventilen ein Sieb (Filter) zuzuordnen. Bei Ventilgehäusen aus Kunststoff werden die Siebe dabei zur Gewährleistung einer entsprechenden Formstabilität bei der Herstellung des Ventilgehäuses in den Kunststoff eingespritzt. Diese Vorgehensweise ist aufwendig und teuer, insbesondere im Hinblick auf die Umsetzung des Spritzgussprozesses, bei dem zuvor das Sieb in das Spritzgusswerkzeug eingelegt werden muss. Darüber hinaus ist dieses Verfahren auf den Einsatz von Metallsieben beschränkt.

In der DE 195 10 647 C1 ist ein Druckregelventil beschrieben, bei dem in einem Ventilgehäuse mehrere radiale Bohrungen vorgesehen sind, in denen jeweils ein Sieb eingelegt und mit einem Sicherungsring gehalten ist. Diese Art des Einbaus der Siebe in das Ventilgehäuse ist aufwendig und kostenintensiv.

In der DE 101 44 289 B4 ist ein für den Einsatz bei Ventilgehäusen aus Metall beschränktes Verfahren bekannt, gemäß dessen das ebenfalls metallische Sieb an das Metallgehäuse durch Laserschweißen angeschweißt wird. Alternativ wird das Sieb am Ventilgehäuse mechanisch eingeklipst. Ein Verfahren nach dem Oberbegriff von Anspruch 1 und ein Ventil nach dem Oberbegriff von Anspruch 9 sind aus DE 3050097 C2 bekannt.

Ausgehend von dem vorgenannten Stand der Technik liegt der Erfindung die Aufgabe zugrunde, ein alternatives, einfaches und kostengünstiges Verfahren zum Herstellen eines Kunststoff-Ventilgehäuses anzugeben, welches an mindestens einer Fluidöffnung im Strömungsweg ein Sieb (Filter) zur Vermeidung eines Schmutzdurchgangs, insbesondere eines Schmutzeintrags in das Ventil aufweist, wobei technisch aufwendige und konstruktiv anspruchsvolle Rast- oder Klipsverbindungen vermieden werden sollen. Das Verfahren soll sich bevorzugt gleichermaßen zum Einsatz von Sieben aus den unterschiedlichen Materialen, insbesondere aus Kunststoff, Gewebe oder Metall eignen.
Ferner besteht die Aufgabe darin, insbesondere mit einem derartigen Verfahren herstellbares und/oder hergestelltes, kostengünstiges, weiter bevorzugt elektromagnetisch betätigbares Ventil anzugeben.
Diese Aufgabe wird hinsichtlich des Verfahrens mit den Merkmalen des Anspruchs 1 gelöst, d. h. bei einem gattungsgemäßen Verfahren dadurch, dass zunächst ein, bevorzugt zuvor spritzgegossener, Kunststoffkörper, aufweisend die mindestens eine Fluidöffnung bereitgestellt und daraufhin das Sieb an dem Kunststoffkörper (im späteren Strömungsweg des Fluids) festgelegt wird, d. h. nicht während, sondern nach der Herstellung des Kunststoffkörpers und zwar durch Anschmelzen der Kunststoffkörperoberfläche in einen Fixierabschnitt durch Ultraschallbeaufschlagung von extern und Ausüben eines Anpressdrucks auf das Sieb (gegen den Fixierabschnitt) zum Pressen des Siebes gegen den Fixierabschnitt und anschließendem Kühlen des Fixierabschnitts und damit Verfestigen der zuvor angeschmolzenen Kunststoffoberfläche. Das Kühlen kann alternativ aktiv, beispielsweise mittels Gebläse oder passiv durch Liegenlassen oder Transport bei Umgebungstemperatur bzw. Abwarten nach Beendigung des Anschmelzvorgangs erfolgen.

Hinsichtlich des Ventils wird die Aufgabe mit dem Merkmal des Anspruchs 9 gelöst, d. h. bei einem gattungsgemäßen Ventil dadurch, dass das Sieb an einem durch Ultraschallbeaufschlagung aufgeschmolzene und wieder erhärtetem Fixierabschnitt der Kunststoffoberfläche fixiert, insbesondere (in das wieder erhärtete Kunststoffmaterial) eingebettet und/oder mit diesem verschweißt, d. h. materialschlüssig verbunden ist.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch aus verfahrensgemäß offenbart gelten und beanspruchbar sein. Ebenso sollen verfahrensgemäß offenbarte Merkmale auch aus vorrichtungsgemäß offenbart gelten und beanspruchbar sein - insbesondere sollen im Rahmen des Verfahrens erläuterte, aus dem Verfahren resultierende strukturelle Merkmale des Ventils oder vom Ventilbestandteilen als vorteilhafte Ausgestaltungen des Ventils offenbart gelten und beanspruchbar sein.

Der Erfindung liegt der Gedanke zugrunde, dass Sieb (Filter) gegen Schmutzdurchsatz im Strömungsweg des Fluids durch Ultraschallbeaufschlagung am Kunststoffkörper, insbesondere mantelseitig festzulegen, derart dass durch die Ultraschallbeaufschlagung die Kunststoffkörperoberfläche, insbesondere am Außenumfang des Kunststoffkörpers, in einen Fixierabschnitt angeschmolzen, d. h. das Kunststoffmaterial oberflächlich verflüssigt oder zumindest in einen duktilen Zustand überführt wird und das Sieb gegen und/oder in dieses verflüssigte oder duktile Kunststoffmaterial gepresst wird, sodass das Kunststoffmaterial nach Erhärten das Sieb, insbesondere am Außenumfang des Kunststoffkörpers hält. Anders ausgedrückt, wird das Sieb erfindungsgemäß im Nachgang zur Herstellung des Kunststoffkörpers, insbesondere im Kunststoffspritzgussverfahren d. h. nicht während der Herstellung festgelegt und zwar durch die verfahrenstechnisch einfach anwendbare und kostengünstige Ultraschalltechnologie, mit welcher das Kunststoffmaterial des Kunststoffkörpers in einen Fixierabschnitt angeschmolzen, und das Sieb nach wiedererhärten des Kunststoffmaterials von diesem gehalten wird, wie später noch erläutert werden wird, je nach Materialwahl des Siebes durch abschnittsweises, insbesondere randseitiges Einbetten des Siebes in das Kunststoffmaterial und/oder durch Herstellen einer schweiß- bzw. materialschlüssigen Verbindung. Im Gegensatz zu den aus dem Stand der Technik bekannten Verbindungsverfahren können mithilfe des erfindungsgemäßen Verfahrens auch aus Kunststoff ausgebildete Siebe eingesetzt werden - darüber hinaus kann, insbesondere für den Fall des Einsatzes metallischer Siebe auf das verfahrenstechnisch aufwendige und kostenintensive Laserschweißverfahren verzichtet werden.

Insgesamt wird durch das erfindungsgemäße Verfahren ein günstiges, bevorzugt elektromagnetisch betätigtes Ventil geschaffen bzw. ein Ventilgehäuse des Ventils, wobei durch das, vorzugsweise mantelseitig angeordnete bzw. bevorzugt einer radialen Fluidöffnung zugeordnete Sieb ein Schmutzdurchgang durch die Fluidöffnung, insbesondere ein Schmutzeintrag in den Ventilkörper sicher verhindert wird.

Die Sieböffnungen sind so gewählt, dass die im Medium auftretenden Schmutzteilchen zuverlässig zurückgehalten werden. Typischerweise liegt der Durchmesser der Sieböffnungen im Bereich zwischen etwa 100 und 300 Mikrometer.

Besonders zweckmäßig ist es, wenn der Kunststoffkörper des Gehäuses aus Glasfaser verstärkten Kunststoff ausgebildet ist - alternativ kann der Kunststoffkörper glasfaserfrei ausgebildet werden.

Als besonders zweckmäßig hat es sich herausgestellt, die Ultraschallbeaufschlagung zum Anschmelzen der Kunststoffkörperoberfläche in den Fixierabschnitt mittels eines Anpressstempels durchzuführen, der auch zur Anpressdruckbeaufschlagung des Siebes dient. Mit anderen Worten erfolgt die Ultraschallbeaufschlagung, insbesondere gleichzeitig mit der Anpressdruckbeaufschlagung, jedenfalls mittels eines Anpressstempels über das bzw. auf das Sieb, von außen. Der Anpressstempel wiederum wird bevorzugt mithilfe eines an sich, beispielsweise aus Ultraschallschweißverfahren bekannten Ultraschallgebers mit Ultraschallwellen beaufschlagt.

Als besonders zweckmäßig hat es sich erwiesen, wenn der Anpressstempel zur Ultraschallbeaufschlagung und zum Aufbringen des Anpressdrucks auf das Sieb eine zum Fixierabschnitt formkongruente, insbesondere gekrümmte, ganz besonders bevorzugt innenzylindersegmentförmige Anlagefläche zur Anlage auf dem Sieb bzw. zur sandwichartigen Aufnahme des Siebs zwischen der Anlagefläche und dem Fixierabschnitt aufweist.

Wie eingangs bereits angedeutet, gibt es im Hinblick auf die konkrete Ausgestaltung der Fixierung bzw. Verbindung zwischen dem Sieb und dem Kunststoffmaterial des Kunststoffkörpers unterschiedliche Möglichkeiten. Für den Fall, dass das Sieb aus einem Material, insbesondere einem Kunststoffmaterial ausgebildet ist, das bei der erfindungsgemäßen Ultraschallbeaufschlagung zumindest teilweise schmilzt kann mittels des erfindungsgemäßen Verfahrens durch die Ultraschallbeaufschlagung eine materialschlüssige Schweißverbindung zwischen dem Sieb und dem Kunststoffkörper hergestellt werden, bei welcher sich das Siebmaterial und das Kunststoffkörpermaterial mischen.

Zusätzlich oder alternativ, insbesondere für den Fall, dass das Siebmaterial bei der Ultraschallbeaufschlagung nicht, oder nur geringfügig bzw. teilweise im mit Ultraschall beaufschlagten Bereich aufschmilzt kann das Sieb durch die Anpresskraftbeaufschlagung in das Material des Fixierbereichs, d. h. in den Kunststoffkörper hinein bewegt werden, insbesondere abschnittsweise in diesem versenkt werden. Anders ausgedrückt wird das Sieb in das Kunststoffmaterial verankert, welches das Siebmaterial nach dem Aushärten abschnittsweise umgibt.

Als verfahrensgemäß besonders vorteilhaft hat sich eine Variante herausgestellt, bei der das Sieb außen über eine die mindestens eine Fluidöffnung, bevorzugt mehrere über den Umfang verteilte Fluidöffnungen, aufweisende, bevorzugt als vollumfänglicher Ringkanal ausgebildete, Umfangsnut angeordnet und auf beiden, vorzugsweise entlang der Axialerstreckung des Ventilkörpers beabstandeten Nutseiten des Kunststoffkörpers, durch Ultraschallbeaufschlagung fixiert wird. Anders ausgedrückt befinden sich seitlich oberhalb beider Nutwände der vorgenannten, vorzugsweise vollumfänglichen Umfangsnut, Fixierabschnitte, insbesondere umlaufende Fixierabschnitte, die durch Ultraschallbeaufschlagung angeschmolzen werden, um das Sieb nach deren Erkalten zu halten. Ganz besonders bevorzugt erfolgt das Fixieren des Siebes auf beiden Nutseiten gleichzeitig, insbesondere mittels mehrerer Stempel oder eines gemeinsamen, nutüberbrückenden Stempel. Als ganz besonders vorteilhaft hat es sich herausgestellt, wenn die Nut zu beiden Seiten eine gegenüber einer äußeren Hüllkontur des Kunststoffkörpers abgesetzte bzw. nach radial innen versetzte Ringschulter aufweist, die den jeweiligen Fixierabschnitt ausbildet.

Insbesondere im Hinblick auf eine zuvor beschriebene Ausführungsform, bei der das Sieb über eine Nut gespannt bzw. über eine Nut angeordnet wird, jedoch nicht beschränkt hierauf, hat es sich als besonders vorteilhaft herausgestellt, wenn das Sieb bandförmig ausgebildet ist und vor der Ultraschallbeaufschlagung um den Kunststoffkörper, insbesondere über einen Umfangswinkel von mindestens 90°, bevorzugt mindestens 180°, noch weiter bevorzugt mindestens 270°, ganz besonders bevorzugt 360° um den Kunststoffkörper herumgelegt wird und dabei oder danach insbesondere mittels mindestens eines Stempels zum Anschmelzen des Kunststoffkörpers ultraschallbeaufschlagt wird.

Die Erfindung führt auch auf ein Ventil mit einem, vorzugsweise mittels eines erfindungsgemäßen Verfahren hergestellten Ventilsgehäuses, in welchem bevorzugt ein Ventilkörper axial entlang der Längserstreckung des Ventilgehäuses verstellbar ist, insbesondere durch Bestromen von elektrischen Spulenmitteln. Das Ventilgehäuse umfasst einen, beispielsweise als Kunststoffspritzgussteil ausgebildeten Kunststoffkörper mit mindestens einer mittels eines Siebes vor Schmutzdurchgang geschützten, bevorzugt mantelseitigen bzw. radialen oder axialen Fluidöffnung, der bevorzugt eine Entlüftungs- und/oder Druck- und/oder Arbeitsanschluss des Ventils zugeordnet ist. Erfindungsgemäß ist das Sieb an einem durch Ultraschallbeaufschlagung aufgeschmolzenem und wieder erhärtetem Fixierabschnitt der Kunststoffkörperoberfläche fixiert, insbesondere in diesem eingebettet und/oder mit diesem verschweißt, d. h. materialschlüssig verbunden.

Wie erwähnt, ist bevorzugt in dem Ventilgehäuse ein Ventilkörper axial durch Bestromen von Spulenmitteln (elektrische Wicklung) verstellbar, wobei entweder der Ventilkörper unmittelbar von einem Anker eines elektromagnetischen Antriebs gebildet oder mittels eines solchen Ankers verstellbar bzw. betätigbar ist.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen:
- Fig. 1:: ausschnittsweise eine Längsschnittansicht durch ein erfindungsgemäßes Ventilgehäuse und
- Fig. 2:: eine Querschnittsansicht des Ventilgehäuses entlang der Schnittlinie A-A gemäß Fig. 1.

In den Figuren sind gleiche Elemente und Elemente mit gleichen Funktionen mit den gleichen Bezugszeichen gekennzeichnet.

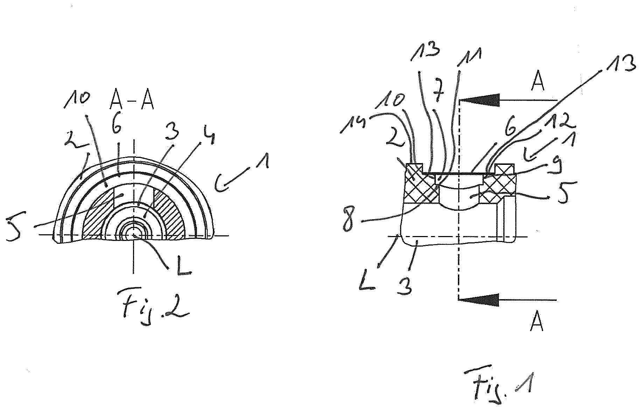

In den Fig. 1 und 2 ist ausschnittsweise in unterschiedlichen Schnittdarstellungen ein Ventilgehäuse 1 eines elektromagnetischen Ventils gezeigt, umfassend einen, hier beispielhaft spritzgegossenen Kunststoffkörper 2 in dem ein Axialkanal 3 für einen beispielsweise kolbenförmigen Ventilkörper 4 ausgebildet ist, der durch Bestromen von nicht gezeigten Spulenmitteln elektromagnetisch aktuierbar ist, um mit einem Ventilsitz in an sich bekannter Weise zusammenzuwirken. Mantelseitig in dem Kunststoffkörper 2 befindet sich eine hier als Eingangsöffnung ausgebildete Fluidöffnung 5, durch die Fluid von außen über einen der Fluidöffnung 5 zugeordneten Ventilanschluss in den Axialkanal 3 strömen kann. In diesem Fluidweg ist ein (Filter-)Sieb 6 angeordnet, um Schmutzpartikel zurückzuhalten. Das Sieb 6 ist bandförmig ausgestaltet und erstreckt sich in Umfangsrichtung 360° um das im Wesentlichen zylindrische Ventilgehäuse 1 herum und zwar um dessen Längsmittelachse L. Dem Sieb 6 ist eine Umfangsnut 7 im Kunststoffkörper 2 zugeordnet, in deren Nutboden 8 die Fluidöffnung 5 eingebracht ist - bevorzugt sind mehrere solche Fluidöffnungen 5 über den Umfang der Umfangsnut 7, insbesondere im Bereich des Nutbodens 8 verteilt angeordnet. Ausgehend von dem Nutboden erstrecken sich in radialer Richtung nach außen zwei einander gegenüberliegende, hier beispielhaft und bevorzugt parallele Nutwände 9, 10, die bis zu jeweils einer Ringschulter 11, 12 reichen, die sich in umfänglicher sowie in axialer Richtung erstrecken. Auf jeder Ringschulter 11, 12 ist ein Fixierabschnitt 13 an der Kunststoffkörperoberfläche 14, in dem konkreten Ausführungsbeispiel auf der jeweiligen Ringschulter 11, 12 ausgebildet. Mit anderen Worten befindet sich auf beiden Axialseiten bezogen auf die Längsmittelachse L der sich in Umfangsrichtung erstreckenden Umfangsnut 7 jeweils ein Fixierabschnitt, an dem das Sieb 6 festgelegt ist.

Zum Festlegen des Siebes 6 an den Kunststoffkörper 2 wird dieses von extern, genauer von radial außen nach radial innen gegen den Kunststoffkörper 2 kraftbeaufschlagt und zwar mittels eines Anpressstempels der gleichzeitig über einen Ultraschallgeber Ultraschallwellen auf das Sieb 6 und damit den Kunststoffkörper 2 aufbringt. Durch diese Ultraschallbeaufschlagung schmilzt das Kunststoffmaterial des Kunststoffkörpers 2 im Bereich der Fixierabschnitte 6 an und wird dadurch flüssig oder duktil - je nach Materialwahl des Siebes erwärmt sich dieses lediglich oder schmilzt auch abschnittsweise. Jedenfalls ist das Sieb 6 nach Abkühlen und dadurch Wiedererhärten des Kunststoffmateriales Kunststoffkörpers 2 am, insbesondere im Fixierabschnitt 13 festgelegt, insbesondere in diesen eingebettet und/oder mit diesem materialschlüssig verbunden, d. h. verschweißt. Wie sich aus einer Zusammenschau der Figuren 1 und 2 ergibt, bilden die Ringschultern 11, 12 den Nutboden einer weiteren, radial außerhalb der Umfangsnut 7 gebildeten Nut, in deren Nutboden wiederum die Umfangsnut 7 eingebracht ist - hieraus resultiert dann zwangsläufig, dass die Ringschultern 11, 12 bezogen auf eine Außenumfangshüllkontur des Ventilgehäuses 1 nach radial innen versetzt sind, sodass das Sieb 6 bezogen auf diese Außenkontur in radialer Richtung nach innen versetzt und somit gut geschützt ist.

### Bezugszeichenliste

- 1: Ventilgehäuse
- 2: Kunststoffkörper
- 3: Axialkanal
- 4: Ventilkörper
- 5: Fluidöffnung
- 6: Sieb
- 7: Umfangsnut
- 8: Nutboden
- 9, 10: Nutwand
- 11, 12: Ringschulter
- 13: Fixierabschnitt
- 14: Kunststoffkörperoberfläche

- L: Längsmittelachse des Ventilkörpers

## Patentansprüche

1. Verfahren zum Herstellen eines, einen Kunststoffkörper (2) mit mindestens einer mittels eines Siebes (6) vor Schmutzdurchgang geschützten Fluidöffnung (5) aufweisenden Ventilgehäuses (1), mit den Schritten:
- Bereitstellen des, vorzugsweise spritzgegossenen, Kunststoffkörpers (2) mit der mindestens einen Fluidöffnung (5);
- Fixieren des Siebes (6) an dem Kunststoffkörper (2) durch Anschmelzen der Kunststoffkörperoberfläche (14) in einem Fixierabschnitt (13) durch Ultraschallbeaufschlagung von extern und Ausüben eines Anpressdrucks auf das Sieb (6) zum Pressen des Siebes (6) gegen den Fixierabschnitt (13);
- Kühlen des Fixierabschnitts (13) und damit Verfestigen der zuvor angeschmolzenen Kunststoffkörperoberfläche (14),
**dadurch gekennzeichnet, dass** das Sieb (6) bandförmig ausgebildet ist und vor der Ultraschallbeaufschlagung um den Kunststoffkörper (2), insbesondere über einen Umfangswinkel von mindestens 90° um den Kunststoffkörper (2) herum gelegt wird.

2. Verfahren nach Anspruch 1,
**dadurch gekennzeichnet,**
**dass** die Ultraschallbeaufschlagung mittels eines Anpressstempels zur Anpressdruckbeaufschlagung des Siebes (6) über das Sieb (6) durchgeführt wird, insbesondere bei gleichzeitiger Anpressdruckbeaufschlagung des Siebes (6) gegen den Fixierabschnitt (13).

3. Verfahren nach Anspruch 2,
**dadurch gekennzeichnet,**
**dass** der Anpresstempel eine zum Fixierabschnitt (13) formkongruente,
insbesondere konkret gekrümmte, Anlagefläche zur Auflage auf dem Sieb (6) aufweist.

4. Verfahren nach einem der vorhergehenden Ansprüche,
**dadurch gekennzeichnet,**
**dass** das Sieb (6) aus einem Material, insbesondere Kunststoffmaterial, ausgebildet ist, welches bei der Ultraschallbeaufschlagung zumindest teilweise schmilzt und durch die Ultraschallbeaufschlagung eine materialschlüssige Schweißverbindung zwischen dem Sieb (6) und dem Kunststoffkörper (2) hergestellt wird.

5. Verfahren nach einem der vorhergehenden Ansprüche,
**dadurch gekennzeichnet,**
**dass** das Sieb (6) in das angeschmolzene Material des Fixierbereichs hinein, insbesondere abschnittsweise in diesem versenkt wird.

6. Verfahren nach einem der vorhergehenden Ansprüche,
**dadurch gekennzeichnet,**
**dass** das Sieb (6) über einer die mindestens eine Fluidöffnung (5), bevorzugt mehrere über den Umfang verteilte Fluidöffnungen (5), aufweisenden, bevorzugt als vollumfänglicher Ringkanal ausgebildete, Außenumfangsnut (7) angeordnet und Fixierabschnitte (13) auf beiden Nutseiten des Kunststoffkörpers (2), insbesondere auf jeweils einer Ringschulter (11, 12), ausgebildet sind, an denen das Sieb (6) durch die Ultraschallbeaufschlagung fixiert wird.

7. Verfahren nach einem der vorhergehenden Ansprüche,
**dadurch gekennzeichnet,**
**dass** das Sieb (6) mindestens 180°, noch weiter bevorzugt mindestens 270°, ganz besonders bevorzugt 360° um den Kunststoffkörper (2) herum gelegt wird.

8. Verfahren nach einem der vorhergehenden Ansprüche,
**dadurch gekennzeichnet,**
**dass** der Kunststoffkörper (2) aus glasfaserverstärktem Kunststoff oder aus glasfaserfreiem Kunststoff ausgebildet ist.

9. Ventil mit einem Ventilgehäuse (1), das vorzugsweise nach einem Verfahren nach einem der vorhergehenden Ansprüche hergestellt ist, wobei das Ventilgehäuse (1) einen Kunststoffkörper (2) mit mindestens einer mittels eines Siebes (6) vor Schmutzdurchgang geschützten, bevorzugt mantelseitigen, Fluidöffnung (5), der bevorzugt ein Entlüftungs- und/oder Druck- und/oder Arbeitsanschluss zugeordnet ist,
**dadurch gekennzeichnet,**
**dass** das Sieb (6) bandförmig ausgebildet ist und um den Kunststoffkörper (2), insbesondere über einen Umfangswinkel von mindestens 90° um den Kunststoffkörper (2) herum gelegt ist, und
**dass** das Sieb (6) an einem durch Ultraschallbeaufschlagung aufgeschmolzenem und wieder erhärtetem Fixierabschnitt (13) der Kunststoffkörperoberfläche (14) fixiert, insbesondere eingebettet und/oder mit diesem verschweißt, ist.

10. Ventil nach Anspruch 9,
**dadurch gekennzeichnet,**
**dass** das Ventil bestrombare Spulenmittel zum Verstellen eines Ankers und/oder eines Ventilkörpers (4) in dem Ventilgehäuse (1) aufweist.

11. Ventil nach einem der Ansprüche 9 bis 10,
**dadurch gekennzeichnet,**
**dass** das das Sieb (6) radial außen über einer die mindestens eine Fluidöffnung (5), bevorzugt mehrere über den Umfang verteilte Fluidöffnungen (5), aufweisenden, bevorzugt als vollumfänglicher Ringkanal ausgebildeten, Außenumfangsnut (7) angeordnet ist und Fixierabschnitte (13) auf beiden Nutseiten des Kunststoffkörpers (2), insbesondere auf jeweils einer Ringschulter (11, 12), ausgebildet sind, an denen das Sieb (6) durch die Ultraschallbeaufschlagung fixiert ist.

## Claims

1. A method for producing a valve housing (1) having a plastic body (2) having at least one fluid opening (5) which is protected against passage of dirt by means of a screen (6), the method comprising the following steps:
- providing the, preferably injection-molded, plastic body (2) having the at least one fluid opening (5);
- fixing the screen (6) to the plastic body (2) by melting the plastic body surface (14) in a fixing area (13) by externally applying ultrasound and applying contact pressure to the screen (6) to press the screen (6) against the fixing area (13);
- cooling the fixing area (13), thus resolidifying the melted plastic body surface (14).
**characterized in that** the screen (6) is band-shaped and is laid around the plastic body (2), in particular across a circumferential angle of at least 90°, around the plastic body (2), prior to the application of ultrasound.

2. The method according to claim 1,
**characterized in that**
ultrasound is applied via the screen (6) by means of a contact ram for applying contact pressure to the screen (6), in particular at the same time as the screen (6) is being pressed against the fixing area (13).

3. The method according to claim 2,
**characterized in that**
the contact ram has a contact surface which serves to come into contact with the screen (6) and which is shaped, in particular specifically curved, to match the fixing area (13).

4. The method according to any one of the preceding claims,
**characterized in that**
the screen (6) is made of a material, in particular a plastic material, which at least partially melts during application of ultrasound and that the application of ultrasound causes a material-bonded welded connection to be produced between the screen (6) and the plastic body (2).

5. The method according to any one of the preceding claims,
**characterized in that**
the screen (6) is sunk into, in particular partially embedded in, the molten material of the fixing area.

6. The method according to any one of the preceding claims,
**characterized in that**
the screen (6) is disposed above an outer circumferential groove (7) which has the at least one fluid opening (5), preferably multiple fluid openings (5) distributed across the circumference, and which is preferably configured as a fully circumferential ring channel, and fixing areas (13) are formed on both groove sides of the plastic body (2), in particular on each ring shoulder (11, 12), the screen (6) being fixed to said fixing areas (13) by the application of ultrasound.

7. The method according to any one of the preceding claims,
**characterized in that**
the screen (6) is laid around the plastic body (2) at an angle of at least 180°, more preferably of at least 270°, particularly preferably of 360°.

8. The method according to any one of the preceding claims,
**characterized in that**
the plastic body (2) is made of glass fiber reinforced plastic or of plastic free of glass fibers.

9. A valve having a valve housing (1) which is preferably produced by a method according to any one of the preceding claims, the valve housing (1) having a plastic body (2) having at least one, preferably wall-side, fluid opening (5) which is protected against passage of dirt by means of a screen (6), a vent port and/or a pressure port and/or a working port preferably being assigned to said fluid opening (5),
**characterized in that**
the screen (6) is band-shaped and is laid around the plastic body (2), in particular across a circumferential angle of at least 90° around the plastic body (2), and
that the screen (6) is fixed to, in particular embedded in and/or welded to, a fixing area (13) of the plastic body surface (14), said fixing area (13) having been molten by application of ultrasound and resolidified.

10. The valve according to claim 9,
**characterized in that**
the valve has coil means which can be energized to displace an armature and/or a valve body (4) in the valve housing (1).

11. The valve according to claim 9 or 10,
**characterized in that**
the screen (6) is disposed radially outside above an outer circumferential groove (7) which has the at least one fluid opening (5), preferably multiple fluid openings (5) distributed across the circumference, and which is preferably configured as a fully circumferential ring channel, and fixing areas (13) are formed on both groove sides of the plastic body (2), in particular on each ring shoulder (11, 12), the screen (6) being fixed to said fixing areas (13) by the application of ultrasound.

## Revendications

1. Procédé de fabrication d'un boîtier de soupape (1) ayant un corps (2) en matière plastique pourvu d'au moins un orifice de fluide (5) protégé contre tout passage d'impuretés au moyen d'un filtre (6), comprenant les étapes :
- fournir le corps (2) en matière plastique, de préférence moulé par injection, pourvu de l'au moins un orifice de fluide (5) ;
- fixer le filtre (6) au corps (2) en matière plastique en faisant fondre la surface (14) du corps en matière plastique dans une partie de fixation (13) par une application d'ultrason de l'extérieur et par une application d'une pression d'appui au filtre (6) afin de presser le filtre (6) contre la partie de fixation (13) ;
- refroidir la partie de fixation (13) et solidifier ainsi la surface fondue (14) du corps en matière plastique,
**caractérisé en ce que** le filtre (6) est réalisé en forme de bande et que ledit filtre (6) est placé autour du corps (2) en matière plastique, notamment d'un angle circonférentiel d'au moins 90° autour du corps (2) en matière plastique, avant l'application d'ultrason.

2. Procédé selon la revendication 1,
**caractérisé en ce que**
l'application d'ultrason est réalisée via le filtre (6) au moyen d'un poinçon de pressage destiné à appliquer une pression d'appui au filtre (6), notamment pendant une application de pression d'appui simultanée du filtre (6) contre la partie de fixation (13).

3. Procédé selon la revendication 2,
**caractérisé en ce que**
le poinçon de pressage a une surface d'appui qui est congruente de forme par rapport à la partie de fixation (13), notamment spécifiquement courbée, et qui est destinée à l'appui sur le filtre (6).

4. Procédé selon l'une quelconque des revendications précédentes,
**caractérisé en ce que**
le filtre (6) est formé d'une matière, notamment une matière plastique, qui fond au moins partiellement pendant l'application d'ultrason et qu'une liaison soudée par matière est réalisée entre le filtre (6) et le corps (2) en matière plastique par l'application d'ultrason.

5. Procédé selon l'une quelconque des revendications précédentes,
**caractérisé en ce que**
le filtre (6) est, notamment partiellement, enfoncé dans la matière fondue de la partie de fixation.

6. Procédé selon l'une quelconque des revendications précédentes,
**caractérisé en ce que**
le filtre (6) est disposé au-dessus d'une rainure de circonférence extérieure (7), de préférence réalisée comme canal annulaire sur toute la circonférence, qui a l'au moins un orifice de fluide (5), de préférence plusieurs orifices de fluide (5) repartis sur la circonférence, et que des parties de fixation (13) sont réalisées des deux côtés de rainure du corps (2) en matière plastique, notamment sur un épaulement annulaire (11, 12) respectif, le filtre (6) étant fixé aux parties de fixation (13) par l'application d'ultrason.

7. Procédé selon l'une quelconque des revendications précédentes,
**caractérisé en ce que**
le filtre (6) est placé à au moins 180°, de préférence à au moins 270°, plus préférentiellement à 360°, autour du corps (2) en matière plastique.

8. Procédé selon l'une quelconque des revendications précédentes,
**caractérisé en ce que**
le corps (2) en matière plastique est réalisé d'un plastique à renfort de verre ou d'un plastique sans fibres de verre.

9. Soupape ayant un boîtier de soupape (1) réalisé au moyen d'un procédé selon l'une quelconque des revendications précédentes, le boîtier de soupape (1) ayant un corps (2) de soupape comprenant au moins un orifice de fluide (5), de préférence au côté latéral, protégé contre un passage d'impuretés au moyen d'un filtre (6), un raccordement de ventilation et/ou de pression et/ou de travail étant assigné à l'orifice de fluide (5),
**caractérisée en ce que**
le filtre (6) est réalisé en forme de bande et que ledit filtre (6) est placé autour du corps (2) en matière plastique, notamment d'un angle circonférentiel d'au moins 90° autour du corps (2) en matière plastique, et
que le filtre (6) est fixé à, notamment intégré dans et/ou soudé avec, une partie de fixation (13) fondue par l'application d'ultrason et resolidifiée de la surface (14) du corps en matière plastique.

10. Soupape selon la revendication 9,
**caractérisé en ce que**
la soupape a des moyens de bobine qui peuvent être alimentés en courant afin de déplacer un induit et/ou un corps de soupape (4) dans le boîtier de soupape (1).

11. Soupape selon la revendication 9 ou la revendication 10,
**caractérisé en ce que**
le filtre (6) est disposé au-dessus d'une rainure de circonférence extérieure (7) à l'extérieur radial, de préférence réalisée comme canal annulaire sur toute la circonférence, qui a l'au moins un orifice de fluide (5), de préférence plusieurs orifices de fluide (5) repartis sur la circonférence, et que des parties de fixation (13) sont réalisées des deux côtés de rainure du corps (2) en matière plastique, notamment sur un épaulement annulaire (11, 12) respectif, le filtre (6) étant fixé aux parties de fixation (13) par l'application d'ultrason.
